# EUROPÄISCHE PATENTSCHRIFT

(11) **EP 3 653 392 B1**
(45) Veröffentlichungstag und Bekanntmachung des Hinweises auf die Patenterteilung: **28.06.2023**
(21) Anmeldenummer: 19205290.0
(22) Anmeldetag: 25.10.2019
(51) Int. Cl.: B41J 19/00, B41J 25/00, B41J 29/02, B41J 3/28, F16C 29/00, F16C 29/02, B41J 25/34, F16C 29/06

(54) **AUFNAHMEVORRICHTUNG ZUR VERSCHIEBBAREN ANORDNUNG EINES DRUCKKOPFMODULRAHMENS**
PICK-UP DEVICE FOR DISPLACEABLE ARRANGEMENT OF A PRINTHEAD MODULE FRAME
DISPOSITIF DE RÉCEPTION DESTINÉ À L'AGENCEMENT MOBILE D'UN CADRE DE MODULE DE TÊTE DE PRESSION

(30) Priorität: 13.11.2018 DE 102018128403
(43) Veröffentlichungstag der Anmeldung: 20.05.2020
(73) Patentinhaber: Notion Systems GmbH, 68723 Schwetzingen (DE)
(72) Erfinder: Paul, Andreas, 68804 Altlussheim (DE); Münkel, Jens, 68766 Hockenheim (DE)
(74) Vertreter: Kalkoff & Partner Patentanwälte mbB

(56) Entgegenhaltungen:
- EP-A1- 1 525 984
- CN-A- 108 215 522
- CN-U- 202 115 110
- Igus GmbH: "drylin Lineartechnik - drylin T-Schienenführungen", , 31. Dezember 2018 (2018-12-31), XP055678283, Gefunden im Internet: URL:https://www.igus.de/contentData/Produc t_Files/Download/pdf/DE_GL9_08-04_drylin_T .pdf [gefunden am 2020-03-20]
- Igus GmbH: "drylin Lineartechnik - drylin W-Profilführungen", , 31. Dezember 2018 (2018-12-31), XP055678288, Gefunden im Internet: URL:https://www.igus.de/contentData/Produc t_Files/Download/pdf/DE_GL9_08-01_drylin_W .pdf [gefunden am 2020-03-20]
- Igus GmbH: "drylin Lineartechnik - digitale Messsysteme", , 31. Dezember 2018 (2018-12-31), XP055678275, Gefunden im Internet: URL:https://www.igus.de/contentData/Produc t_Files/Download/pdf/DE_GL9_08-08_drylin_m ess.pdf [gefunden am 2020-03-20]

## Beschreibung

Die Erfindung betrifft eine Aufnahmevorrichtung zur verschiebbaren Anordnung eines Druckkopfmodulrahmens.

Bei unterschiedlichen Drucksystemen, wie bspw. Tintenstrahldrucksystemen wird mit sogenannten Druckkopfmodulen gearbeitet, bei denen es sich um Druckköpfe, Trocknungseinheiten oder dergleichen handeln kann. Um ein Druckbild mit hoher Präzision zu erreichen, müssen die Druckkopfmodule präzise positioniert werden. Bei Drucksystemen mit mehreren Druckkopfmodulen müssen in der Regel alle Druckkopfmodule mit großer Genauigkeit und exakter Ausrichtung zueinander positioniert werden. Erschwert wird dies durch die Notwendigkeit, dass die Ausrichtung der Druckkopfmodule in den übrigen Richtungen, d. h. vom Abstand zueinander abgesehen, durch die genannte Ausrichtung möglichst unbeeinflusst sein soll.

Bekannte Aufnahmevorrichtungen zur Anordnung von Druckkopfmodulen weisen in festen Abständen voneinander angeordnete Aufnahmeschlitze auf, in welche die Druckkopfmodule, bspw. Druckköpfe oder Trocknungseinheiten im festen Abstand zueinander angeordnet sind. Die unveränderbare Anordnung der Aufnahmeschlitze zueinander macht es, insbesondere im Falle von Laboranwendungen, in welchen ein häufiger Austausch von Druckköpfen oder Trocknungseinheiten erfolgen muss, nicht möglich, die Druckkopfmodule in der für den jeweiligen Prozess gewünschten Weise zueinander auszurichten. Darüber hinaus weisen die bestehenden Aufnahmeschlitze den Nachteil auf, dass diese für zukünftige, andersartig ausgebildete Druckkopfmodule möglicherweise nicht mehr zur Aufnahme geeignet sind.

Eine Aufnahmevorrichtung gemäß dem Oberbegriff des Anspruchs 1 ist beispielsweise aus EP 1 525 984 A1 bekannt.

Hiervon ausgehend liegt der Erfindung die Aufgabe zugrunde, eine Aufnahmevorrichtung zur verschiebbaren Anordnung eines Druckkopfmodulrahmens bereitzustellen, welche eine flexible Ausrichtung sowie zuverlässige Positionierung der Druckkopfmodulrahmen in der eingestellten Position gewährleistet.

Die Erfindung löst die Aufgabe durch eine Aufnahmevorrichtung mit den Merkmalen des Anspruchs 1. Vorteilhafte Weiterbildungen sind in den abhängigen Ansprüchen angegeben.

Die erfindungsgemäße Aufnahmevorrichtung weist einen Druckkopfmodulrahmen, zwei im Abstand voneinander angeordnete Längsstreben eines Halterrahmens und jeweils eine an den Längsstreben angeordnete, Führungsschiene auf. Die Führungsschienen sind parallel zueinander ausgerichtet. Kennzeichnend für die erfindungsgemäße Aufnahmevorrichtung ist, dass der Druckkopfmodulrahmen mit seinen den Führungsschienen zugewandten Enden mit einem Laufwagen verbunden ist, welcher gemeinsam mit der jeweiligen Führungsschiene eine Linearführung bildet, die Aufnahmevorrichtung jeweils eine an der jeweiligen Längsstrebe angeordnete, parallel zur jeweiligen Führungsschiene verlaufende Arretierungsschiene aufweist, die zur lösbaren Arretierung eines an einem der Laufwagen angeordneten Arretierungselements ausgebildet ist und die Aufnahmevorrichtung es erlaubt, ein oder mehrere Druckkopfmodulrahmen entlang der an den Längsstreben angeordneten Führungsschienen in eine beliebige Position an dem Halterrahmen zu verschieben und in der eingestellten Position zu fixieren. Bei Druckkopfmodulrahmen handelt es sich um Halterungen zur ortsfesten Anordnung unterschiedlicher Druckkopfmodule wie bspw. Druckköpfe, Trocknungseinheiten oder dergleichen.

Zur Arretierung der eingestellten Position des Druckkopfmodulrahmens an den Führungsschienen ist an mindestens einem Laufwagen, bevorzugt beiden Laufwagen, ein Arretierungselement angeordnet, welches in der eingestellten Position lösbar mit der Arretierungsschiene verbindbar ist, sodass der Laufwagen in der eingestellten Position an der Führungsschiene festgelegt ist.

In Abhängigkeit von der Länge der Führungsschienen lassen sich mehrere mit Druckkopfmodulen versehene Druckkopfmodulrahmen frei entlang der Führungsschiene positionieren und in der eingestellten Position arretieren, sodass die Aufnahmevorrichtung eine hohe Flexibilität zur Ausrichtung und Positionierung der an dem Druckkopfmodulrahmen angeordneten Druckkopfmodule bietet. Die hohe Flexibilität der Anordnung der Drucckopfmodulrahmen bietet mehr Freiheiten zur Evaluierung der besten bzw. notwendigen Parameter des jeweiligen Druckmediums. Die Linearführung bieten dabei eine hohe mechanische Steifigkeit. Gleichzeitig besteht über die Möglichkeit zur Arretierung eine hohe Präzision in der Ausrichtung der einzelnen Druckkopfmodule zueinander.

Die erfindungsgemäße Aufnahmevorrichtung bietet überdies die Möglichkeit einer einfachen Anpassung der Druckkopfmodulausrichtung, wobei hierzu die Druckkopfmodulrahmen in einfacher Weise über die diesen zugeordneten Laufwagen von den Führungsschienen entnommen bzw. wieder an diesen angeordnet werden können.

Die Ausgestaltung des Arretierungselements zur Festlegung des Druckkopfmodulrahmens an der Führungsschiene ist grundsätzlich frei wählbar. Nach einer besonders vorteilhaften Ausgestaltung der Erfindung ist jedoch vorgesehen, dass das Arretierungselement parallel zur Führungsschiene mechanisch steif und senkrecht zur Führungsschiene flexibel ausgebildet ist. Durch diese Ausgestaltung der Erfindung ist besonders zuverlässig sichergestellt, dass bei einer Festlegung des Arretierungselements an der Arretierungsschiene aufgrund der starren Verbindung zwischen dem Arretierungselement und dem Laufwagen eine Verstellung in Längsachsenrichtung der Führungsschiene vermieden wird. Die flexible Ausgestaltung der Arretierungselemente senkrecht zur Führungsschiene gewährleistet dabei, dass es nicht zu Verspannungen innerhalb der Linearführung kommt, nachdem bei der Festlegung des Arretierungselements zu Verspannungen führende Kräfte durch die Flexibilität des Arretierungselements abgeleitet werden. Eine entsprechende Ausgestaltung der Erfindung erhöht die Positioniergenauigkeit sowie Prozesssicherheit in ergänzender Weise.

Die Ausgestaltung des Arretierungselements, insbesondere dessen Ausgestaltung mit einer senkrecht zur Führungsschiene bestehenden Flexibilität gemäß der vorteilhaften Weiterbildung der Erfindung ist grundsätzlich frei wählbar. Nach einer besonders vorteilhaften Ausgestaltung der Erfindung ist jedoch vorgesehen, dass das Arretierungselement einen Laufwagenflügel und einen Arretierungsflügel mit einer Aufnahmeöffnung für ein an der Arretierungsschiene festlegbares Fixierungselement aufweist, wobei der Arretierungsflügel und der Laufwagenflügel abgewinkelt, bevorzugt unter einem Winkel von in etwa 90°, zueinander verlaufen. Ein abgewinkelter Verlauf des mit dem Laufwagen verbundenen Laufwagenflügels und des mit der Arretierungsschiene verbindbaren Arretierungsflügels bedingt bei einer entsprechenden Ausgestaltung des Arretierungselements, bspw. im Falle dessen Bildung als Festkörpergelenk, bspw. aus einem Blechmaterial, aufgrund der Biegeeigenschaften des Arretierungsflügel gegenüber dem Laufwagenflügel in einfacher Weise die nach einer vorteilhaften Weiterbildung vorgesehene Flexibilität, durch die Verspannungen durch die Arretierung vermieden werden. Ein entsprechend ausgebildetes Arretierungselement lässt sich besonders einfach und kostengünstig sowie bauraumsparend ausbilden und gewährleistet überdies eine zuverlässige Arretierung des Laufwagens an der Führungsschiene.

Zur Arretierung können dabei bspw. Schrauben, Klemmelemente oder dergleichen verwendet werden, welche in eine entsprechende Aufnahme an der Arretierungsschiene, bspw. eine sich in Längsachsenrichtung erstreckende Längsnut, welche die Arretierungselementaufnahme bildet, eingeschraubt sind. Eine Schraubverbindung und/oder Klemmverbindung gewährleistet dabei in hohem Maße eine zuverlässige Positionierung des Druckkopfmodulrahmens und erlaubt es in einfacher Weise die Arretierung aufzulösen und den Druckkopfmodulrahmen im Bedarfsfall entlang der Führungsschiene zu verstellen.

Besonders bevorzugt ist dabei das Fixierungselement, bspw. die Befestigungsschraube derart mit der Arretierungsschiene in Wirkverbindung bringbar, dass der Arretierungsflügel über eine senkrecht zur Arretierungsschiene, bevorzugt über eine senkrecht zu einer durch den Halterahmen gebildeten Ebene wirkenden Haltekraft an der Arretierungsschiene arretiert ist. Eine entsprechende Ausgestaltung gewährleistet in besonderem Maße, dass es nicht zu Verspannungen durch die Arretierung kommt, welche einen Einfluss auf die zuvor eingestellte Position der an dem Druckkopfmodulrahmen angeordneten Druckkopfmodule hätte. Insbesondere die Ausgestaltungen der Fixierung derart, dass das Fixierungselement senkrecht zu einer durch den Halterrahmen gebildeten Ebene eine Haltekraft auf die Arretierungsschiene ausübt, verhindert besonders zuverlässig Verspannungen innerhalb des Systems und gewährleistet gleichzeitig eine sichere Arretierung in Längsachsenrichtung der Führungsschiene.

Die Ausrichtung der Druckkopfmodule an den Arretierungsschienen kann grundsätzlich in beliebiger Weise erfolgen bspw. durch ein Längenmesssystem mit Positionssensoren, das die automatische, motorisch angetriebene Positionierung der Druckkopfmodule gegenüber externen Peripherieelementen, wie Reinigungsstationen oder Cappingstationen, ermöglicht. Nach einer besonders vorteilhaften Ausgestaltung der Erfindung ist jedoch vorgesehen, dass das Arretierungselement ein mit einer Skala an der Arretierungsschiene korrespondierendes Zeigerelement aufweist.

Gemäß dieser Ausgestaltung der Erfindung ist bevorzugt an der Arretierungsschiene eine Skala, bspw. nach Art eines Längenmaßes angebracht, wobei ein Zeigerelement an dem Arretierungselement derart angeordnet ist, dass es bei einer Verstellung des Druckkopfmodulrahmens entlang der Arretierungsschiene entlang der Skala verstellt wird, sodass über diese eine Positionierung des Druckkopfmodulrahmens erfolgen kann. Diese Ausgestaltung erleichtert die Einstellung der Position des Druckkopfmodulrahmens, bzw. erleichtert die Erfassung und Dokumentation eines für einen Prozess als geeignet erachteten Ausrichtung der Druckkopfmodulrahmen an der Aufnahmevorrichtung.

Grundsätzlich weist die erfindungsgemäße Aufnahmevorrichtung durch den Halterrahmen mit zwei Längsstreben des Halterrahmens eine ausreichende Stabilität auf, um die Drucckopfmodulrahmen zuverlässig, auch in Richtung einer senkrecht zu einer durch den Halterrahmen aufgespannten Ebene zu positionieren, wobei erhöhten Belastungen durch eine entsprechende Dimensionierung des Halterrahmens bzw. der Längsstreben begegnet werden kann. Nach einer besonders vorteilhaften Ausgestaltung der Erfindung ist vorgesehen, dass die Aufnahmevorrichtung zwei parallel im Abstand zu der durch den Halterrahmen gebildeten Ebene sowie parallel zueinander jeweils an einem Horizontalträger eines Stützrahmens angeordnete Stützschienen aufweist, die zur längsverschieblichen Aufnahme eines mit einer Vertikalstütze verbundenen zweiten Laufwagens ausgebildet sind, wobei die Vertikalstütze über einen ersten mit der Vertikalstütze verbundenen Laufwagen an der Führungsschiene des Halterrahmens verschiebbar gelagert ist.

Gemäß dieser Ausgestaltung der Erfindung sind zwei weitere als Stützschienen ausgebildete Führungsschienen parallel und - bezogen auf die Gebrauchslage - im vertikalen Abstand zu den Führungsschienen angeordnet, sodass die Stützschienen eine Ebene aufspannen, welche oberhalb - bezogen auf die Gebrauchslage - des durch den Halterrahmen aufgespannten Ebene verläuft. Die Stützschienen sind dabei an dem Horizontalträger eines Stützrahmens angeordnet, welcher gegenüber den Längsstreben starr ausgebildet ist. Über eine oder mehrere Vertikalstützen, welche einenends über einen ersten Laufwagen an der Führungsschiene und anderenends über einen zweiten Laufwagen an der Stützschiene verschiebbar gelagert sind, besteht somit die Möglichkeit, die Längsstreben, bzw. die an den Längsstreben angeordneten Führungsschienen abzustützen, sodass eventuell aufgrund erhöhter Belastungen auftretende Biegekräfte, welche durch die Druckkopfmodulrahmen auf den Halterrahmen wirken, über die Stützschienen abgeleitet werden können, sodass in besonders zuverlässiger Weise eine wie auch immer geartete Durchbiegung der Führungsschienen vermieden wird. Die Vertikalstützen lassen sich dabei entlang der Führungsschienen in eine beliebige Position verstellen, sodass entsprechend der Prozessanforderungen an unterschiedlichen Positionen eine oder mehrere Vertikalstützen angeordnet werden können.

Eine Festlegung der Vertikalstützen an der Führungsschiene kann ebenfalls über ein an dem ersten Laufwagen der Vertikalstütze angeordnetes Arretierungselement erfolgen, über welches der Laufwagen an der Arretierungsschiene festgelegt wird. Nach einer weiteren Ausgestaltung der Erfindung ist vorgesehen, dass im Bereich des zweiten Laufwagens an der Stützstrebe oder an dem zweiten Laufwagen ein Arretierungselement angeordnet ist, das an einer parallel zur Stützschiene an dem Horizontalträger angeordneten Arretierungsschiene lösbar arretierbar ist. Gemäß dieser Ausgestaltung der Erfindung ist im Bereich des zweiten Laufwagens bzw. im Bereich des der Stützschiene zugewandten Endes der Vertikalstütze ein Arretierungselement angeordnet, welches mit einer Arretierungsschiene in Eingriff bringbar ist, die parallel zur Stützschiene an dem Horizontalträger angeordnet ist. Die Arretierung über ein Arretierungselement im Bereich des zweiten Laufwagens verbessert die Positionssicherheit der Vertikalstütze in ergänzender Weise und gewährleistet somit eine besonders stabile Ausgestaltung der Aufnahmevorrichtung.

Die Ausgestaltung des Stützrahmens mit dem Horizontalträger ist grundsätzlich frei wählbar, sofern gewährleistet ist, dass der Horizontalträger an der Aufnahmevorrichtung ortsstabil gegenüber den Längsstreben des Halterrahmens positioniert ist. Nach einer weiteren Ausgestaltung der Erfindung ist vorgesehen, dass der Stützrahmen zwei endseitig an den Horizontalträger angrenzende Vertikalträger aufweist, die an dem Halterrahmen abgestützt sind oder mit einem an dem Halterrahmen anliegenden Grundträger verbunden sind.

Gemäß dieser Ausgestaltung der Erfindung stützt sich der Horizontalträger über zwei - bezogen auf die Gebrauchslage - sich in senkrechter Richtung gegenüber dem Horizontalträger erstreckende Vertikalträger an dem Halterrahmen ab, bzw. sind mit einem Grundträger verbunden, welcher auf dem Halterrahmen aufliegt. Besonders bevorzugt sind dabei der Horizontalträger, die Vertikalträger und der Grundträger einstückig ausgebildet, wobei durch diese Ausgestaltung der Erfindung in besonders zuverlässiger Weise eine stabile Abstützung und Anordnung des Horizontalträgers gegenüber der Längsstrebe gewährleistet wird. Überdies erlaubt eine entsprechende Ausgestaltung des Stützrahmens, insbesondere im Falle deren einstückiger Ausgestaltung, eine besonders einfache und kostengünstige Herstellung der Aufnahmevorrichtung.

Wie auch der Horizontalträger, so können auch die Längsstreben grundsätzlich in beliebiger Weise an der Aufnahmevorrichtung angeordnet sein, sofern deren Position an der Aufnahmevorrichtung zuverlässig gewährleistet ist. Nach einer besonders vorteilhaften Ausgestaltung der Erfindung bilden die Längsstreben gemeinsam mit zwei Querstreben den Halterrahmen, welcher besonders bevorzugt einstückig ausgebildet ist. Diese Ausgestaltung des Halterrahmens gewährleistet eine besonders hohe Festigkeit und Steifigkeit des Halterrahmens und damit eine sichere Positionierung der Längsstreben zueinander, wobei insbesondere eine einstückige Ausgestaltung des Halterrahmens eine besonders einfache und kostengünstige Herstellung der Aufnahmevorrichtung erlaubt.

Die Ausgestaltung der Linearführung, welche aus dem Laufwagen und der Laufschiene gebildet ist, ist ebenfalls grundsätzlich frei wählbar, wobei diese bspw. durch eine Schwalbenschwanzführung oder dergleichen realisiert werden kann. Nach einer besonders vorteilhaften Ausgestaltung der Erfindung ist jedoch vorgesehen, dass die aus erstem Laufwagen und Laufschiene und/oder zweitem Laufwagen und Stützschiene gebildete Linearführung als spielfrei vorgespannte Kugelumlaufführung ausgebildet ist. Diese Ausgestaltung der Erfindung zeichnet sich durch die besonders exakte und spielfreie Positionierbarkeit der mit dem Druckkopfmodulrahmen verbundenen Laufwagen an der Führungsschiene bzw. Stützschiene aus. Die Kugelumlaufführung erlaubt eine exakte und wiederholgenaue Ausrichtung der an dem Druckkopfmodulrahmen angeordneten Druckkopfmodule.

Ein Ausführungsbeispiel der Erfindung wird nachstehend mit Bezug auf die Zeichnungen erläutert. In den Zeichnungen zeigen:
- Fig. 1: eine perspektivische Ansicht einer Ausführungsform einer Aufnahmevorrichtung für Druckkopfmodulrahmen;
- Fig. 2: in einer perspektivischen Ansicht ein Ausschnitt der Aufnahmevorrichtung von Figur 1;
- Fig. 3: in einer perspektivischen Ansicht einen weiteren Ausschnitt der Aufnahmevorrichtung von Figur 1 und
- Fig. 4: in einer weiteren perspektivischen Ansicht ein Ausschnitt der Aufnahmevorrichtung von Figur 1.

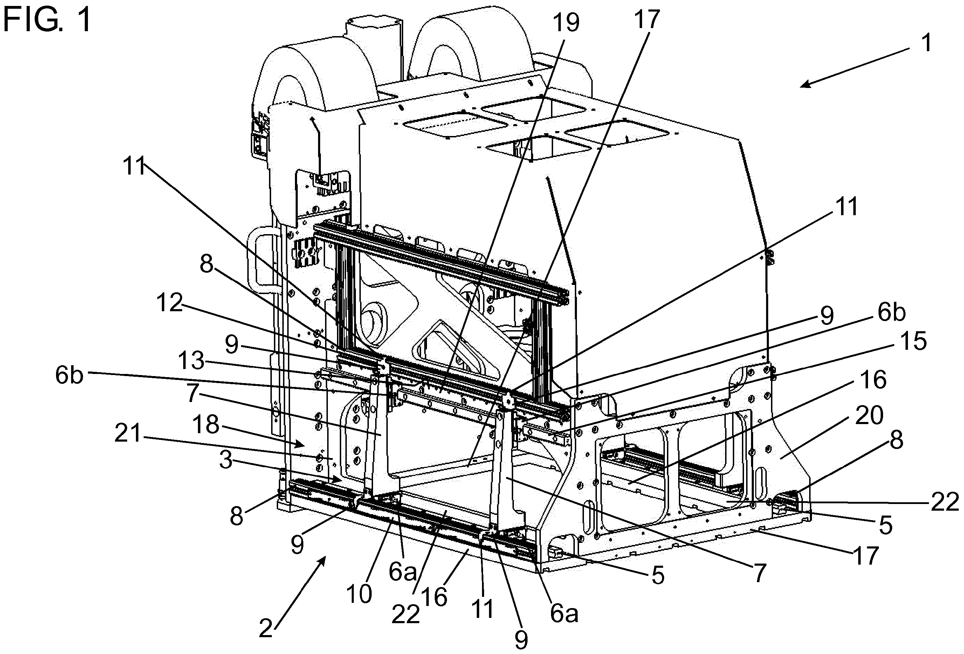

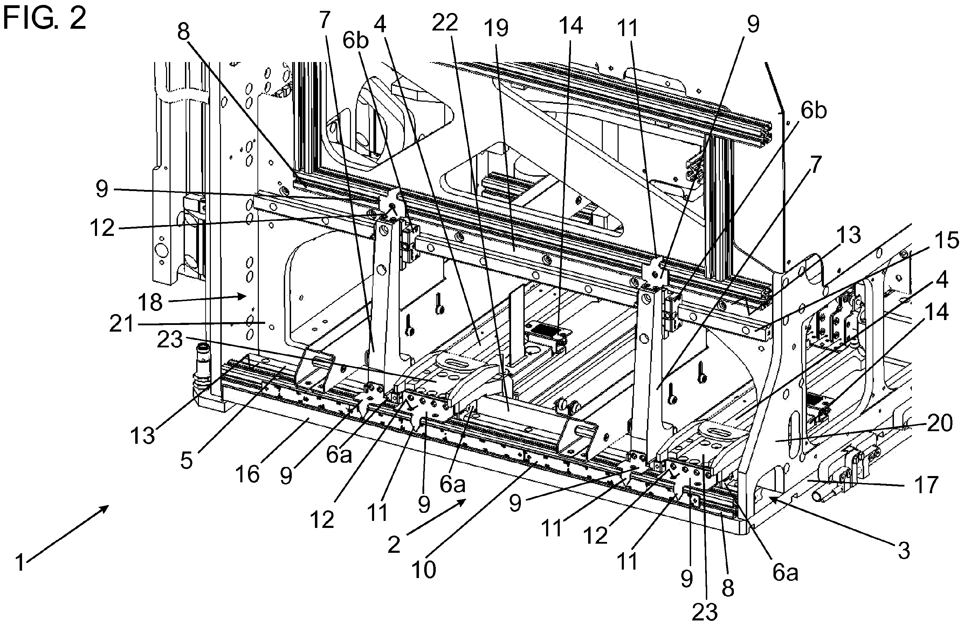

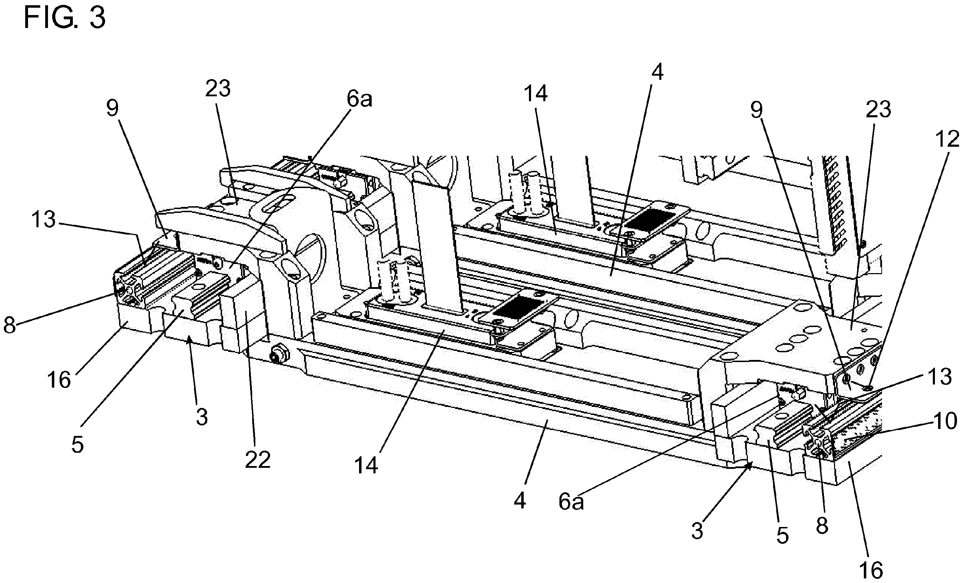

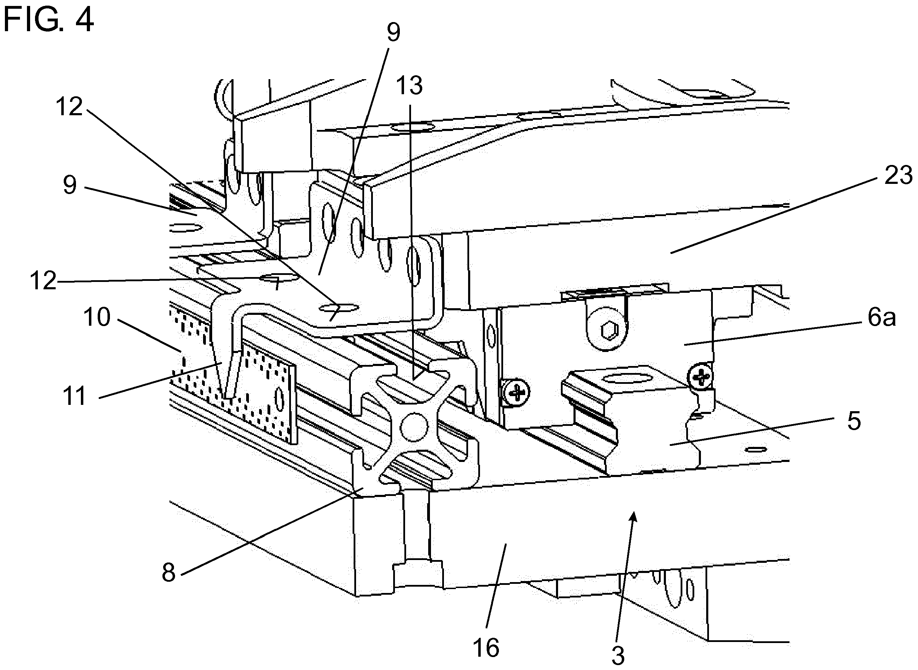

In Figur 1 ist in einer perspektivischen Ansicht eine Ausführungsform einer Aufnahmevorrichtung 1 zur Aufnahme von in den Figuren 2 bis 4 an der Aufnahmevorrichtung 1 angeordneten Druckkopfmodulrahmen 4 dargestellt.

Die Aufnahmevorrichtung 1 weist als zentrales Element zur Aufnahme von Druckkopfmodulen wie Druckköpfen 14, hier nicht dargestellten Trocknungseinheiten oder dergleichen einen Halterrahmen 2 auf, welcher durch zwei im Abstand voneinander angeordnete Längsstreben 16 sowie zwei die Längsstreben 16 verbindenden Querstreben 17 gebildet ist. An den Längsstreben 16 des Halterrahmens 2 sind jeweils benachbart zueinander eine Führungsschiene 5 sowie eine Arretierungsschiene 8 parallel zueinander verlaufend angeordnet. Die Führungsschiene 5 dient zur Aufnahme eines Laufwagens 6a, welcher über einen Ausleger 23 mit dem Druckkopfmodulrahmen 4 verbunden ist. Die Laufwagen 6a bilden gemeinsam mit der Führungsschiene 5 eine Linearführung 3 und ermöglichen es, die Druckkopfmodulrahmen 4 entlang der Führungsschiene 5 an dem Halterrahmen 2 zu verstellen.

Zur Festlegung der eingestellten Position der Druckkopfmodulrahmen 4 an dem Halterrahmen 2 ist an dem Laufwagen 6a ein Arretierungselement 9 in Form eines Blechwinkels angeordnet, welches mit einem Laufwagenflügel an dem Laufwagen 6a und mit einem Arretierungsflügel an der Arretierungsschiene 8 anliegt. Das Arretierungselement 9 weist dabei eine Aufnahmeöffnung 12 auf, welche zur Aufnahme von hier nicht dargestellten Befestigungsschrauben geeignet ist, die in eine in Form einer Längsnut 13 ausgebildete Arretierungselementaufnahme an der Arretierungsschiene 8 einschraubbar sind, sodass über das Arretierungselement 9 und den Laufwagen 6a der Druckkopfmodulrahmen 4 in einer beliebigen Position an der Führungsschiene 5 festgelegt werden kann.

Ein mit dem Arretierungselement 9 verbundenes Zeigerelement 11 liegt an einer an der Arretierungsschiene 8 angebrachten Längenskala 10 an und erlaubt somit eine exakte Positionierung und Ausrichtung des Druckkopfmodulrahmens 4 an dem Halterrahmen 2.

Neben der Möglichkeit, eine unterschiedliche Anzahl von Druckkopfmodulrahmen 4 an dem Halterrahmen 2 anzuordnen, bietet die Führungsschiene 5 die Möglichkeit der Anordnung von Vertikalstützen 7, welche ebenfalls über einen Laufwagen 6a entlang der Führungsschiene 5 verstellbar sind. Mit ihren der Führungsschiene 5 gegenüberliegenden Enden sind die Vertikalstützen 7 mit einem zweiten Laufwagen 6b verbunden, welcher an einer - bezogen auf die Gebrauchslage - oberhalb der Führungsschiene 5 angeordneten Stützschiene 15 verstellbar gelagert ist.

Die Stützschiene 15 verläuft dabei an einem Horizontalträger 19 eines Stützrahmens 18, welcher neben dem Horizontalträger 19 zwei an die Enden des Horizontalträgers 19 anschließende Vertikalträger 21 sowie einen sich an die Vertikalträger 21 anschließenden Grundträger 22 aufweist, welcher auf den Längsstreben 16 des Halterrahmens 2 aufliegt und damit gegenüber diesem abgestützt ist. Die Vertikalstützen 7 stabilisieren die Position des Halterrahmens 2 an der Aufnahmevorrichtung 1 und beugen überdies eventuellen Durchbiegungen des Halterrahmens 2 vor. Zur Festlegung der Vertikalstützen 7 weisen diese im Bereich des ersten Laufwagens 6a sowie im Bereich des zweiten Laufwagens 6b jeweils ein Arretierungselement 9 auf, welches an den benachbart zu der Führungsschiene 5 bzw. Stützschiene 15 verlaufenden Arretierungsschienen 8 festlegbar ist.

Zur Festlegung der Position des Stützrahmens 18 und des Halterrahmens 2 sind diese über beiderends angeordnete Abdeckplatten 20 miteinander verbunden.

### Bezugszeichenliste

- 1: Aufnahmevorrichtung
- 2: Halterrahmen
- 3: Linearführung
- 4: Druckkopfmodulrahmen
- 5: Führungsschiene
- 6a, 6b: Laufwagen
- 7: Vertikalstütze
- 8: Arretierungsschiene
- 9: Arretierungselement
- 10: Skala
- 11: Zeigeelement
- 12: Aufnahmeöffnung
- 13: Arretierungselementaufnahme (Längsnut)
- 14: Druckkopf
- 15: Stützschiene
- 16: Längsstrebe
- 17: Querstrebe
- 18: Stützrahmen
- 19: Horizontalträger
- 20: Abdeckplatte
- 21: Vertikalträger
- 22: Grundträger
- 23: Ausleger

## Patentansprüche

1. Aufnahmevorrichtung, die aufweist:
- einen Druckkopfmodulrahmen (4), wobei Druckkopfmodulrahmen (4) Halterungen zur ortsfesten Anordnung unterschiedlicher Druckkopfmodule (14) sind,
- zwei im Abstand voneinander angeordnete Längsstreben (16) eines Halterrahmens (2),
- jeweils eine an der jeweiligen Längsstrebe (16) angeordnete Führungsschiene (5), wobei die Führungsschienen (5) parallel zueinander ausgerichtet sind,
**dadurch gekennzeichnet, dass**
- der Druckkopfmodulrahmen (4) mit seinen den Führungsschienen (5) zugewandten Enden jeweils mit einem Laufwagen (6a) verbunden ist, welcher gemeinsam mit der jeweiligen Führungsschiene (5) eine Linearführung (3) bildet,
- die Aufnahmevorrichtung jeweils eine an der jeweiligen Längsstrebe (16) angeordnete, parallel zur jeweiligen Führungsschiene (5) verlaufende Arretierungsschiene (8) aufweist, die zur lösbaren Arretierung eines an einem der Laufwagen (6a) angeordneten Arretierungselements (9) ausgebildet ist, und
- wobei die Aufnahmevorrichtung es erlaubt, ein oder mehrere Druckkopfmodulrahmen (4) entlang der an den Längsstreben (16) angeordneten Führungsschienen (5) in eine beliebige Position an dem Halterrahmen (2) zu verschieben und in der eingestellten Position zu fixieren.

2. Aufnahmevorrichtung nach Anspruch 1, **dadurch gekennzeichnet, dass** das Arretierungselement (9) parallel zur Führungsschiene (5) mechanisch steif und senkrecht zur Führungsschiene (5) flexibel ausgebildet ist.

3. Aufnahmevorrichtung nach Anspruch 1 oder 2, **dadurch gekennzeichnet, dass** das Arretierungselement (9) einen Laufwagenflügel und einen Arretierungsflügel mit einer Aufnahmeöffnung (12) für ein an der Arretierungsschiene (8) festlegbares Fixierungselement aufweist, wobei der Arretierungsflügel und der Laufwagenflügel abgewinkelt zueinander verlaufen.

4. Aufnahmevorrichtung nach Anspruch 3, **dadurch gekennzeichnet, dass** das Fixierungselement derart mit der Arretierungsschiene (8) in Wirkverbindung bringbar ist, dass der Arretierungsflügel über eine senkrecht zur Arretierungsschiene (8), bevorzugt senkrecht zu einer durch den Halterrahmen (2) gebildeten Ebene wirkenden Haltekraft an der Arretierungsschiene (8) arretiert ist.

5. Aufnahmevorrichtung nach einem oder mehreren der vorherigen Ansprüche, **dadurch gekennzeichnet, dass** das Arretierungselement (9) ein mit einer Skala (10) an der Arretierungsschiene (8) korrespondierendes Zeigerelement (11) aufweist.

6. Aufnahmevorrichtung nach einem oder mehreren der vorherigen Ansprüche, **gekennzeichnet durch** zwei parallel im Abstand zu der durch den Halterrahmen (2) gebildeten Ebene sowie parallel zueinander jeweils an einem Horizontalträger (19) eines Stützrahmens (18) angeordneten Stützschienen (15), die zur längsverschieblichen Aufnahme eines mit einer Vertikalstütze (7) verbundenen zweiten Laufwagens (6b) ausgebildet ist, wobei die Vertikalstütze (7) über einen ersten mit der Vertikalstrebe verbundenen Laufwagen an der Führungsschiene des Halterrahmens verschiebbar gelagert ist.

7. Aufnahmevorrichtung nach Anspruch 6, **dadurch gekennzeichnet, dass** im Bereich des zweiten Laufwagens (6b) an der Vertikalstütze (7) oder an dem zweiten Laufwagen (6b) ein Arretierungselement (9) angeordnet ist, dass an einer parallel zur Stützschiene (15) an dem Horizontalträger (19) angeordneten Arretierungsschiene (8) lösbar arretierbar ist.

8. Aufnahmevorrichtung nach einem oder mehreren der vorherigen Ansprüche, **dadurch gekennzeichnet, dass** der Stützrahmen (18) zwei endseitig an den Horizontalträger (19) angrenzende Vertikalträger (21) aufweist, die an dem Halterrahmen (2) abgestützt sind oder mit einem an dem Halterrahmen (2) anliegenden Grundträger (22) verbunden sind.

9. Aufnahmevorrichtung nach einem oder mehreren der vorherigen Ansprüche, **dadurch gekennzeichnet, dass** der Halterrahmen (2) zwei parallel im Abstand voneinander angeordnete, die Längsstreben (16) im Bereich ihrer freien Enden verbindende Querstreben (17) aufweist.

10. Aufnahmevorrichtung nach einem oder mehreren der vorherigen Ansprüche, **dadurch gekennzeichnet, dass** der Stützrahmen (18) und/oder der Halterrahmen (2) einstückig ausgebildet ist.

11. Aufnahmevorrichtung nach einem oder mehreren der vorherigen Ansprüche, **dadurch gekennzeichnet, dass** die aus erstem Laufwagen (6a) und Führungsschiene (5) und/oder zweitem Laufwagen (6b) und Stützschiene (15) gebildete Linearführung (3) als Kugelumlaufführung ausgebildet ist.

## Claims

1. Pick-up device comprising:
- a printhead module frame (4), wherein printhead module frames (4) are holders for the stationary arrangement of different printhead modules (14),
- two spaced-apart longitudinal struts (16) of a holder frame (2),
- in each case one guide rail (5) arranged on the respective longitudinal strut (16), the guide rails (5) being aligned parallel to one another
**characterized in that**
- the printhead module frame (4) is connected by its ends facing the guide rails (5) in each case to a carriage (6a) which, together with the respective guide rail (5), forms a linear guide (3)
- the pick-up device has in each case a locking rail (8) which is arranged at the respective longitudinal strut (16), runs parallel to the respective guide rail (5) and is configured for releasable locking of a locking element (9) arranged at one of the carriages (6a), and
- wherein the pick-up device allows one or more printhead module frames (4) to be displaced along the guide rails (5) arranged at the longitudinal struts (16) into any position on the holder frame (2) and to be fixed in the set position.

2. Pick-up device according to claim 1, **characterized in that** the locking element (9) is mechanically rigid parallel to the guide rail (5) and flexible perpendicular to the guide rail (5).

3. Pick-up device according to claim 1 or 2, **characterized in that** the locking element (9) has a carriage wing and a locking wing with a receiving opening (12) for a fixing element which can be fixed to the locking rail (8), the locking wing and the carriage wing running at an angle to one another.

4. Pick-up device according to claim 3, **characterized in that** the fixing element can be brought into operative connection with the locking rail (8) in such a way that the locking wing is locked at the locking rail (8) by means of a holding force acting perpendicularly to the locking rail (8), preferably perpendicularly to a plane formed by the holder frame (2).

5. Pick-up device according to one or more of the previous claims, **characterized in that** the locking element (9) has a pointer element (11) corresponding to a scale (10) at the locking rail (8).

6. Pick-up device according to one or more of the previous claims, **characterized by** two support rails (15) arranged parallel at a distance from the plane formed by the holder frame (2) and parallel to one another in each case at a horizontal support (19) of a support frame (18), which support rail (15) is configured for the longitudinally displaceable mounting of a second carriage (6b) connected to a vertical support (7), the vertical support (7) being mounted displaceably at the guide rail of the holder frame via a first carriage connected to the vertical strut.

7. Pick-up device according to claim 6, **characterized in that** a locking element (9) is arranged in the region of the second carriage (6b) at the vertical support (7) or at the second carriage (6b), which locking element (9) can be detachably locked at a locking rail (8) arranged parallel to the support rail (15) at the horizontal support (19).

8. Pick-up device according to one or more of the previous claims, **characterized in that** the support frame (18) has two vertical supports (21) which adjoin the horizontal support (19) at the ends and are supported at the holder frame (2) or are connected to a base support (22) attached at the holder frame (2).

9. Pick-up device according to one or more of the previous claims, **characterized in that** the holder frame (2) has two transverse struts (17) arranged in parallel at a distance from one another and connecting the longitudinal struts (16) in the region of their free ends.

10. Pick-up device according to one or more of the previous claims, **characterized in that** the support frame (18) and/or the holder frame (2) is formed in one piece.

11. Pick-up device according to one or more of the previous claims, **characterized in that** the linear guide (3) formed by the first carriage (6a) and guide rail (5) and/or the second carriage (6b) and support rail (15) is configured as a recirculating ball bearing guide.

## Revendications

1. Dispositif de réception comprenant :
- un cadre de module de tête d'impression (4), les cadres de module de tête d'impression (4) étant des supports pour la disposition fixe de différents modules de tête d'impression (14),
- deux entretoises longitudinales (16) d'un cadre de support (2) disposées à distance l'une de l'autre,
- respectivement un rail de guidage (5) disposé sur l'entretoise longitudinale (16) respective, les rails de guidage (5) étant orientés parallèlement les uns aux autres ,
**caractérisé en ce que**
- le cadre de module de tête d'impression (4) est relié par ses extrémités tournées vers les rails de guidage (5) respectivement à un chariot (6a), qui forme un guidage linéaire (3) conjointement avec le rail de guidage (5) respectif,
- le dispositif de réception présente respectivement un rail d'arrêt (8) disposé sur l'entretoise longitudinale (16) respective et s'étendant parallèlement au rail de guidage (5) respectif, qui est conçu pour l'arrêt amovible d'un élément d'arrêt (9) disposé sur l'un des chariots (6a), et
- où le dispositif de réception permet de déplacer un ou plusieurs cadres de module de tête d'impression (4) le long des rails de guidage (5) disposés sur les entretoises longitudinales (16) dans une position quelconque sur le cadre de support (2) et de les fixer dans la position réglée.

2. Dispositif de réception selon la revendication 1, **caractérisé en ce que** l'élément d'arrêt (9) est rigide mécaniquement parallèlement au rail de guidage (5) et flexible perpendiculairement au rail de guidage (5).

3. Dispositif de réception selon la revendication 1 ou 2, **caractérisé en ce que** l'élément d'arrêt (9) présente une aile de chariot et une aile d'arrêt avec une ouverture de réception (12) pour un élément de fixation pouvant être fixé sur le rail d'arrêt (8), l'aile d'arrêt et l'aile de chariot s'étendant de manière coudée l'une par rapport à l'autre.

4. Dispositif de réception selon la revendication 3, **caractérisé en ce que** l'élément de fixation peut être amené en liaison active avec le rail d'arrêt (8) de telle sorte que l'aile d'arrêt est arrêtée sur le rail d'arrêt (8) par une force de retenue agissant perpendiculairement au rail d'arrêt (8), de préférence perpendiculairement à un plan formé par le cadre de support (2).

5. Dispositif de réception selon une ou plusieurs des revendications précédentes, **caractérisé en ce que** l'élément d'arrêt (9) présente un élément indicateur (11) correspondant à une échelle (10) sur le rail d'arrêt (8) .

6. Dispositif de réception selon l'une ou plusieurs des revendications précédentes, **caractérisé par** deux rails de support (15) disposés parallèlement à distance du plan formé par le cadre de support (2) ainsi que parallèlement l'un à l'autre, respectivement sur une poutre horizontale (19) d'un cadre de support (18), qui est conçu pour recevoir de manière déplaçable longitudinalement un deuxième chariot (6b) relié à un support vertical (7), le support vertical (7) étant logé de manière déplaçable sur le rail de guidage du cadre de support par l'intermédiaire d'un premier chariot relié à l'entretoise verticale.

7. Dispositif de réception selon la revendication 6, **caractérisé en ce que** dans la zone du deuxième chariot (6b), sur le support vertical (7) ou sur le deuxième chariot (6b), est disposé un élément d'arrêt (9) qui peut être bloqué de manière amovible sur un rail d'arrêt (8) disposé parallèlement au rail de support (15) sur la poutre horizontale (19).

8. Dispositif de réception selon l'une ou plusieurs des revendications précédentes, **caractérisé en ce que** le cadre de support (18) présente deux poutres verticales (21) adjacentes à la poutre horizontale (19) du côté de l'extrémité, qui s'appuient sur le cadre de support (2) ou qui sont reliées à une poutre de base (22) adjacente au cadre de support (2).

9. Dispositif de réception selon une ou plusieurs des revendications précédentes, **caractérisé en ce que** le cadre de support (2) présente deux entretoises transversales (17) disposées parallèlement à distance l'une de l'autre et reliant les entretoises longitudinales (16) au niveau de leurs extrémités libres.

10. Dispositif de réception selon une ou plusieurs des revendications précédentes, **caractérisé en ce que** le cadre de support (18) et/ou le cadre de support (2) sont formés d'une seule pièce.

11. Dispositif de réception selon une ou plusieurs des revendications précédentes, **caractérisé en ce que** le guidage linéaire (3) formé par le premier chariot (6a) et le rail de guidage (5) et/ou le deuxième chariot (6b) et le rail de support (15) est conçu comme un guidage à recirculation de billes.
